# EUROPÄISCHE PATENTSCHRIFT

(11) **EP 2 099 629 B1**
(45) Veröffentlichungstag und Bekanntmachung des Hinweises auf die Patenterteilung: **10.03.2010**
(21) Anmeldenummer: 07817400.0
(22) Anmeldetag: 14.11.2007
(51) Int. Cl.: B60J 5/10

(54) **EINHÄNGUNG ZUR VERBINDUNG VON OBER- UND UNTERTEIL EINER GETEILTEN AUSKLAPPBAREN HECKKLAPPE FÜR FAHRZEUGE**
MOUNT FOR CONNECTING THE UPPER AND LOWER PARTS OF A DIVIDED HINGED TAILGATE FOR MOTOR VEHICLES
ATTACHE POUR ASSEMBLER LA PARTIE SUPÉRIEURE ET LA PARTIE INFÉRIEURE D'UN HAYON RELEVABLE EN DEUX PARTIES POUR VÉHICULES

(30) Priorität: 04.12.2006 CZ 20060770
(43) Veröffentlichungstag der Anmeldung: 16.09.2009
(73) Patentinhaber: Skoda Auto a.s., 293 60 Mlada Boleslav (CZ)
(72) Erfinder: ERBEN, Karel, 29301 Mladá Boleslav (CZ); DEMEL, Jan, 294 04 Dolní Bousov (CZ)
(86) Internationale Anmeldenummer: PCT/CZ2007/000104
(87) Internationale Veröffentlichungsnummer: WO 2008/067780

(56) Entgegenhaltungen:
- WO-A-98/30407
- DE-A1-102006 013 735

## Beschreibung

Die Erfindung bezieht sich auf eine Einhängung zur Verbindung von Ober- und Unterteil einer geteilten, ausklappbaren Heckklappe für Fahrzeuge gemäß dem Oberbegriff von Anspruch 1.

Eine Einhängung, die das obere und untere Teil der zweiteiligen ausklappbaren Fahrzeugheckklappe miteinander verbindet, ist z.B. aus DE 102006013735 A bekannt. Die Einhängung wird aus einem Rahmen, welcher am oberen Teil der ausklappbaren Heckklappe befestigt ist, und einem Schenkel, welcher am unteren Teil der ausklappbaren Heckklappe des Fahrzeugs angebracht ist, gebildet. Der Schenkel ist um den Einhängungsbolzen drehbar. Dieser ist Bestandteil des festen Schenkels.

In einer Ausführung dieser bekannten Einhängung ist im Rahmen auf Gleitbuchsen drehbar ein Verbindungsbolzen befestigt, an welchen ein Rotationshebel mit Bolzen angebracht ist, angebracht an der Rahmeninnenseite, anliegend zum Bediensystem, das an der Karosserie angebracht ist, sowie das Nockenelement mit Aussparung, in welches der im Rahmen fest eingefasste Bozen eingreift. Das Nockenelement und der Schenkel sind zwischen beiden Rahmenteilen angebracht. Der Rotationshebel ist mit einem Bolzen versehen, welcher in den Bedienmechanismus, der an der Karosserie befestigt ist, eingreift; mittels dieses wird das Nockenelement zwischen zwei Funktionsendpositionen gedreht. Das Nockenelement wird mittels des an der Karosserie befestigten Bedienmechanismus lediglich bei geschlossener ausklappbarer Heckklappe bzw. wenigstens des oberen Teils, wenn der Bolzen auf dem Rotationshebel in den Bedienmechanismus einrastet, gedreht.

Bei der Drehung des Nockenelements in die erste Endstellung wird der Bolzen, der am Schenkel befestigt ist, gelöst, und dieser Schenkel, kann sich gegenüber dem festen Schenkel drehen bzw. das untere Teil kann gegenüber dem oberen Teil der ausklappbaren Heckklappe gedreht werden, und so kann lediglich das untere Teil der ausklappbaren Heckklappe geöffnet werden. Bei der Drehung des Nockenelements in die zweite Endstellung rastet der am Schenkel befestigte Bolzen in das Nockenelement ein, womit der Schenkel und der Rahmen bzw. das untere Teil und das obere Teil der ausklappbaren Heckklappe, fest verbunden sind, und die gesamte ausklappbare Heckklappe, d.h. das untere und das obere Teil, können geöffnet werden.

Der Nachteil dieser Lösung durch einen Mechanismus, der durch den Verbindungsbolzen, an dem das Nockenelement befestigt ist, gebildet ist, wobei das Nockenelement mittels des Rotationshebels mit Bolzen gedreht wird, ist dessen konstruktive Aufwendigkeit, die geringe Festigkeit, eine schlechtere Gleitfähigkeit und eine komplizierte Montage und Demontage.

Ausgehend hiervon ist es Aufgabe der vorliegenden Erfindung, die genannten Nachteile zu beseitigen.

Die Aufgabe wird durch die Merkmale des Anspruchs 1 gelöst.

Bei der Drehung des Nockenelements in die erste Endstellung wird der Bolzen, der am Schenkel befestigt ist, gelost, und diester Schenkel kann sich gegenüber dem festen Rahmen drehen bzw. das untere Teil kann gegenüber dem oberen Teil der ausklappbaren Heckklappe gedreht werden, und so kann lediglich das untere Teil der ausklappbaren Heckklappe geöffnet werden. Das Nockenelement wird mittels des an der Karosserie befestigten Bedienmechanismus lediglich bei geschlossener ausklappbarer Heckklappe bzw. wenigstens des oberen Teils, wenn der Bolzen, befindlich auf dem Nockenelement, in den Bedienmechanismus einrastet, gedreht.

Bei der Drehung des Nockenelements in die zweite Endstellung rastet der am Schenkel befestigte Bolzen in das Nockenelement ein, womit der Schenkel und der Rahmen, bzw. das untere Teil und das obere Teil der ausklappbaren Heckklappe, fest verbunden sind und die gesamte ausklappbare Heckklappe, d.h. das untere und das obere Teil, geöffnet werden können.

Die Erfindung wird näher durch die schematischen Zeichnungen erläutert, wobei in der Fig. 1 die ausklappbare Heckklappe in der geschlossenen Position dargestellt ist. In der Fig. 2 ist die ausklappbare Heckklappe lediglich im unteren Teil geöffnet und in der Fig. 3 ist die ausklappbare Heckklappe in der Gesamtheit geöffnet. Die Fig. 4 stellt die axonometrische Ansicht der Einhängung und vor allem die mögliche Art und Weise der Befestigung zum oberen und unteren Teil der ausklappbaren Heckklappe dar.

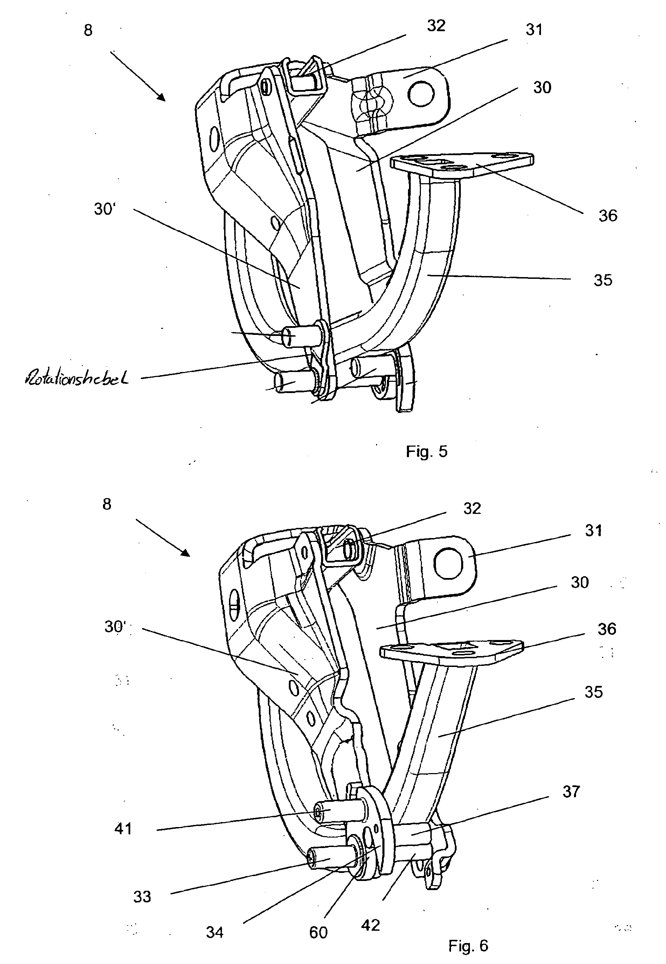

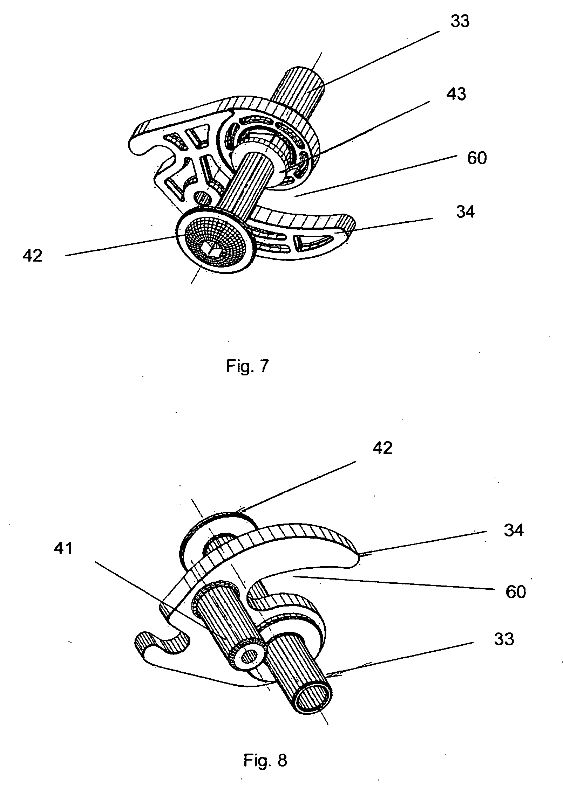

Die Fig. 5 zeigt den Aufbau der Einhängung mit dem Nockenmechanismus laut einer betriebsbekannten Einhängung. Die Fig. 6 zeigt den Aufbau der Einhängung mit dem Nockenmechanismus laut der vorliegenden Erfindung auf. In der Fig. 7 ist ein Sicherungselement des unteren Teils dargestellt. In der Fig. 8 ist das Sicherungselement des unteren Teils aus einer anderen Perspektive dargestellt.

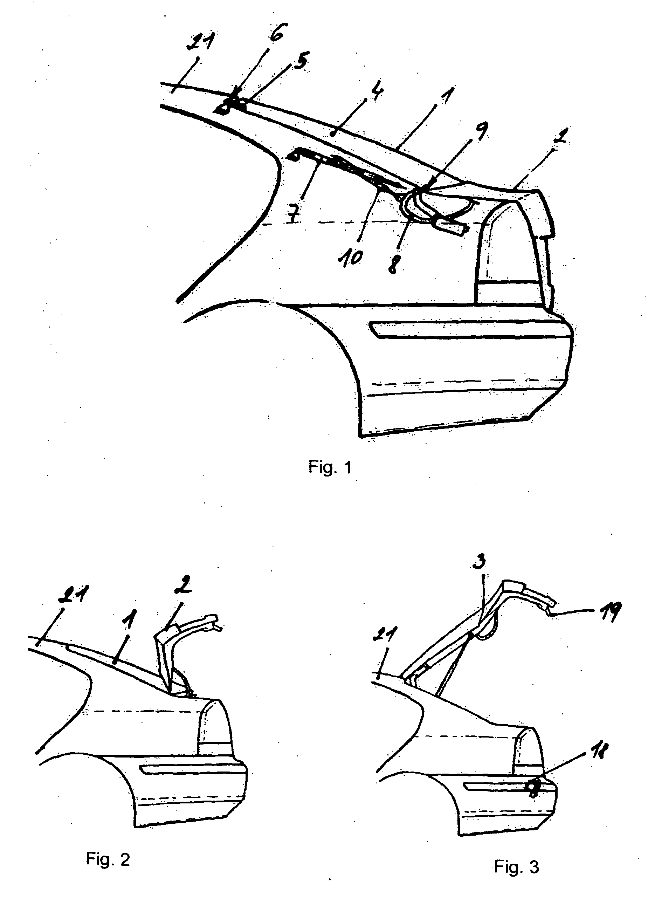

Die ausklappbare Heckklappe 3 für Fahrzeuge laut der Fig. 1 bis 3 beinhaltet das obere Teil 1 und das untere Teil 2.

Das untere Teil 2 hat am unteren Rand ein Schlossunterteil 19 zur Einrastung einer Öse 18, positioniert an der hinteren Schwelle des Karosseriekofferraums 21. Das obere Teil 1 ist mit einer Verglasung 4 versehen und ist mittels eines ersten Paars der einachsigen Einhängung 5 ausklappbar um die Achse 6 zur Karosserie 21 befestigt. Zwischen der Karosserie 21 und dem oberen Teil 1 befindet sich ein Paar eines ersten Gasdruckdämpfers 7. Am unteren Rand des oberen Teils 1 ist mittels eines zweiten Paars der einachsigen Einhängungen 8, ausklappbar um die Achse 9, das untere Teil 2 angebracht. Zwischen dem oberen Teil 1 und dem unteren Teil 2 befindet sich ein zweite Paar eines Gasdruckdämpfers 10.

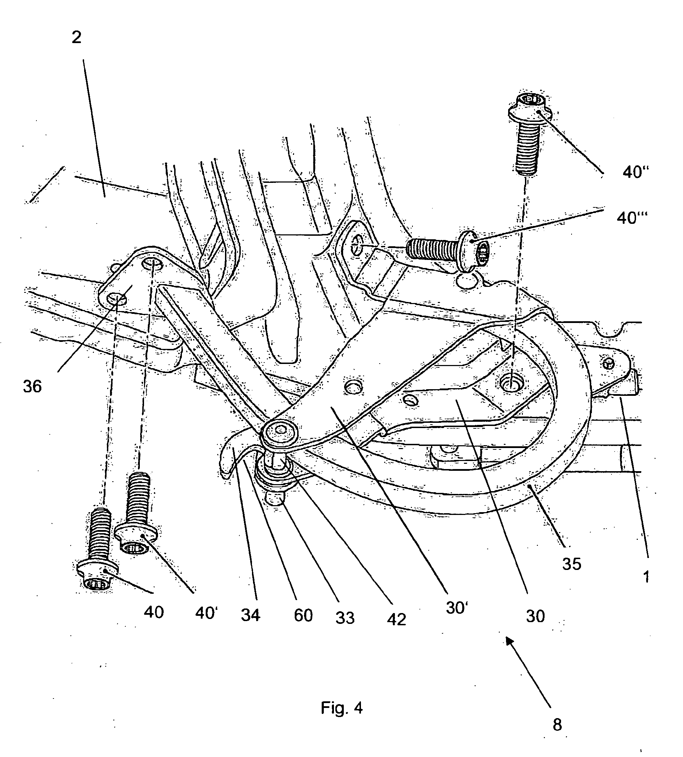

Die Fig. 4 stellt die axonometrische Ansicht der Einhängung 8 und vor allem die mögliche Art und Weise der Befestigung zur oberen und unteren Teil der ausklappbaren Heckklappe dar. Der feste Rahmen 30, 30' ist am oberen Teil 1 mittels der Schrauben 40", 40"' befestigt. Der drehbare Schenkel ist am unteren Teil mit zwei Schrauben 40, 40' befestigt.

Die Fig. 5 zeigt den Aufbau der Einhängung 8 mit dem Nockenmechanismus laut einer betriebsbekannten Einhängung auf.

Die Abbildung 6 zeigt den Aufbau der Einhängung 8 mit dem Nockenmechanismus laut der vorliegenden Erfindung auf. Die Einhängung der geteilten ausklappbaren Heckklappe für Fahrzeuge 8 wird durch den Rahmen 30, 30', mit der Anbringungsmöglichkeit am oberen Teil 1 der ausklappbaren Heckklappe 3 und durch den Schenkel 35 mit der Anbringungsmöglichkeit am unteren 2 ausklappbaren Heckklappenteil 3 und drehbar zum Rahmen 30, 30' angebracht, gebildet. Der Schenkel 35 ist mit einem Bolzen 37 versehen und oder Rahmen 30, 30' hat ein Nockenelement des unteren 34 Teils mit einer länglichen Aussparung 60 für die Bolzenarretierung 37, wobei das Nockenelement 34 mit einem Bolzen 41 für die Übertragung des Drehmoments seitens des Bedienmechanismus, welcher sich an der Karosserie befindet, ausgestattet ist. Das Nockenelement 34 befindet sich an der Innenseite des Rahmens 30, 30' anliegend zum Bedienelement an der Karosserie. Das Nockenelement 34 ist drehbar zum Bolzen 33 befestigt. Der Bolzen 33 ist fest mit der Schraube 42 verbunden und bildet mit diesem eine Einheit. Der Bolzen 33 und die Schraube 42 sind drehbar im festen Rahmen 30, 30' befestigt. Das Fahrzeug ist mindestens mit einer Einhängung 8 mit einem Nockenelement 34 gemäß einem der Ansprüche versehen.

In der Fig. 7 ist das Sicherungselement dargestellt. Das Nockenelement 34 ist mit einem Bolzen 41 versehen. Der Bolzen 33 ist fest mit der Schraube 42 verbunden.

In der Fig. 8 ist das Sicherungselement des unteren Teils aus einer anderen Perspektive dargestellt.

### Liste der Bezugszeichen

- 1: Oberteil
- 2: Unterteil
- 3: Ausklappbare Heckklappe
- 4: Verglasung
- 5: Erste einachsige Einhängung
- 6: Achse der ersten Einhängung
- 7: Erster Gasdruckdämpfer
- 8: Zweite einachsige Einhängung
- 9: Achse der zweiten Einhängung
- 10: Zweiter Gasdruckdämpfer
- 18: Öse
- 19: Unteres Schloss
- 21: Karosserie
- 30, 30': Rahmen
- 31: Halterung mit Öse
- 32: Bolzen der Einhängung
- 33: Bolzen des Nockenelements am Unterteil
- 34: Nockenelement des Unterteils
- 35: Schenkel
- 36: Halterung
- 37: Bolzen des Unterteils
- 38: Halterung des Gasdruckdämpfers
- 39: Bolzen des Gasdruckdämpfers
- 40, 40', 40", 40"': Schrauben
- 41: Bolzen
- 42: Schraube des Nockenelements am Unterteil
- 43: Unterlegscheibe
- 50: Verbindungsbolzen
- 51: Rotationshebel
- 52: Bolzen
- 53: Bolzen des Unterteils
- 54: Nockenelement des Unterteils
- 60: Längsaussparung

## Patentansprüche

1. Einhängung zur Verbindung von Ober- und Unterteil einer geteilten ausklappbaren Heckklappe für Fahrzeuge (8), die mittels eines Rahmens (30, 30') der am Oberteil (1) der ausklappbaren Heckklappe (3) befestigbar ist und mittels eines Schenkels (35), der am unteren Teil (2) der ausklappbaren Heckklappe (3) befestigbar und drehbar am Rahmen (30, 30') angebracht ist, gebildet wird,
wobei der Schenkel (35) mit einem ersten Bolzen (37) versehen ist und der Rahmen (30, 30') mit einem Nockenelement (34) mit einer Längsaussparung (60) zur Einrastung des ersten Bolzens (37) versehen ist, und wobei dieses Nockenelement (34) mit einem zweiten Bolzen (41) für die Übertragung des Drehmoments einer an der Fahrzeugkarosserie angebrachten Bedienvorrichtung versehen ist, **dadurch gekennzeichnet, dass** das Nockenelement (34) drehbar an einem dritten Bolzen (33) befestigt ist,

2. Einhängung nach Anspruch 1,
**dadurch gekennzeichnet,**
**dass** sich das Nockenelement (34) an der Innenseite des Rahmens (30, 30'), die im montierten Zustand zur Bedienvorrichtung, die an der Karosserie angebracht ist, weist, befindet.

3. Einhängung nach Anspruch 1 oder 2,
**dadurch gekennzeichnet,**
**dass** das Nockenelement (34) mittels einer Schraube (42) fest verbunden ist und somit eine Einheit bildet.

4. Einhängung nach Anspruch 3,
**dadurch gekennzeichnet,**
**dass** der dritte Bolzen (33) und die Schraube (42) drehbar im festen Rahmen befestigt sind.

5. Fahrzeug mit einer geteilten, ausklappbaren Heckklappe,
**dadurch gekennzeichnet,**
**dass** dieses mit mindestens einer Einhängung gemäß einem der vorstehenden Ansprüche versehen ist.

## Claims

1. Mount for connecting the upper and lower part of a divided hinged tailgate for vehicles (8), which is formed by means of a frame (30, 30') which can be fastened to the upper part (1) of the hinged tailgate (3), and by means of a leg (35) which can be fastened to the lower part (2) of the hinged tailgate (3) and which is rotatably mounted on the frame (30, 30'), wherein the leg (35) is provided with a first bolt (37) and the frame (30, 30') is provided with a cam element (34) having a longitudinal recess (60) for engaging the first bolt (37), and wherein this cam element (34) is provided with a second bolt (41) for transmitting the torque from an operating device mounted on the vehicle body, **characterized in that** the cam element (34) is rotatably fastened to a third bolt (33).

2. Mount according to Claim 1, **characterized in that** the cam element (34) is situated on the inner side of the frame (30, 30'), which inner side, in the mounted state, faces the operating device which is mounted on the body.

3. Mount according to Claim 1 or 2, **characterized in that** the cam element (34) is firmly connected by means of a screw (42) and thus forms a unit.

4. Mount according to Claim 3, **characterized in that** the third bolt (33) and the screw (42) are rotatably fastened in the fixed frame.

5. Vehicle having a divided, hinged tailgate, **characterized in that** it is provided with at least one mount according to one of the preceding claims.

## Revendications

1. Attache pour assembler la partie supérieure et la partie inférieure d'un hayon arrière rabattable en deux parties pour véhicules (8), qui est formée au moyen d'un cadre (30, 30') qui peut être fixé à la partie supérieure (1) du hayon arrière rabattable (3), et au moyen d'une branche (35), qui est montée de manière à pouvoir être fixée à la partie inférieure (2) du hayon arrière rabattable (3) et à pouvoir tourner sur le cadre (30, 30'),
la branche (35) étant pourvue d'un premier boulon (37) et le cadre (30, 30') étant pourvu d'un élément de came (34) avec un évidement longitudinal (60) pour l'encliquetage du premier boulon (37), et cet élément de came (34) étant pourvu d'un deuxième boulon (41) pour la transmission du couple d'un dispositif de commande monté sur la carrosserie du véhicule,
**caractérisée en ce que**
l'élément de came (34) est fixé de manière rotative sur un troisième boulon (33).

2. Attache selon la revendication 1,
**caractérisée en ce que**
l'élément de came (34) se trouve sur le côté intérieur du cadre (30, 30') qui est tourné dans l'état monté vers le dispositif de commande qui est monté sur la carrosserie.

3. Attache selon la revendication 1 ou 2,
**caractérisée en ce que**
l'élément de came (34) est connecté fixement au moyen d'une vis (42) et forme ainsi une unité.

4. Attache selon la revendication 3,
**caractérisée en ce que**
le troisième boulon (33) et la vis (42) sont fixés de manière rotative dans le cadre fixe.

5. Véhicule comprenant un hayon arrière rabattable en deux parties,
**caractérisé en ce que**
celui-ci est pourvu d'au moins une attache selon l'une quelconque des revendications précédentes.
